# EUROPEAN PATENT APPLICATION

(11) **EP 4 130 755 A1**
(43) Date of publication of application: **08.02.2023**
(21) Application number: 21774128.9
(22) Date of filing: 24.03.2021
(51) Int. Cl.: G01P 21/02, G01P 5/26, A61B 5/026, A61B 5/0285

(54) **MEASUREMENT SYSTEM, MEASUREMENT MODULE, MEASUREMENT PROCESSING DEVICE, AND MEASUREMENT METHOD**

(30) Priority: 26.03.2020 JP 2020056377
(71) Applicant: Kyocera Corporation, Kyoto-shi Kyoto 612-8501 (JP)
(72) Inventor: NAGASAKA, Yushi, Kyoto-shi, Kyoto 612-8501 (JP)
(74) Representative: Viering, Jentschura & Partner mbB Patent- und Rechtsanwälte
(86) International application number: PCT/JP2021/012194
(87) International publication number: WO 2021/193704

(57) **Abstract**

A measurement system according to an aspect of the present disclosure is a measurement system that measures a degree of motion of a moving measurement target. In the measurement system, a calculation unit performs M (M is an integer of 2 or more) types of calculation with respect to a light reception signal generated by receiving scattered light from the measurement target, in order to calculate M calculation values. A calculation determination unit determines, based on M x N of the calculation values obtained by performing N (N is an integer of 2 or more) measurements and based on N standard values corresponding to the N measurements, a calculation to be employed.

## Description

### TECHNICAL FIELD

The present disclosure relates to a measurement system that measures a degree of motion of a moving measurement target.

### BACKGROUND OF INVENTION

In the related art, there is a known fluid evaluation device that determines a flow rate or a flow velocity of a fluid flowing inside a tube, a living organism, or the like. An example of this fluid evaluation device is disclosed in Patent Document 1.

The fluid evaluation device disclosed in Patent Document 1 includes a light source that irradiates a measurement target with light, and a light receiving unit that receives scattered light, of the irradiated light, from the measurement target, and outputs a light reception signal. The fluid evaluation device outputs the flow rate or flow velocity of a fluid based on a relationship between light reception amount information included in the light reception signal and information based on a beat signal generated due to the Doppler shift of light.

### CITATION LIST

### PATENT LITERATURE

Patent Document 1: JP 2017-113320 A (Published June 29, 2017)

### SUMMARY

In an aspect of the present disclosure, a measurement system for measuring a degree of motion of a moving measurement target includes a signal acquiring unit configured to acquire a light reception signal generated by receiving scattered light from the measurement target, a calculation unit configured to perform M (M is an integer of 2 or more) types of calculation with respect to the light reception signal, to calculate M calculation values, and a calculation determination unit configured to determine, based on M x N of the calculation values obtained by performing N (N is an integer of 2 or more) measurements and based on N standard values corresponding to the N measurements, a calculation to be employed.

In an aspect of the present disclosure, a measurement module for measuring a degree of motion of a moving measurement target includes a signal acquiring unit configured to acquire a light reception signal generated by receiving scattered light from the measurement target, and a calculation unit configured to perform M (M is an integer of 2 or more) types of calculation with respect to the light reception signal, to calculate M calculation values, and, based on an input from outside, to switch a calculation to be performed among the M types of calculation, and perform the calculation.

In an aspect of the present disclosure, a measurement method for measuring a degree of motion of a moving measurement target includes signal acquiring processing of acquiring a light reception signal generated by receiving scattered light from the measurement target, calculation processing of performing M (M is an integer of 2 or more) types of calculation with respect to the light reception signal, to calculate M calculation values, and calculation determination processing of determining, based on M x N of the calculation values obtained by performing N (N is an integer of 2 or more) measurements and based on N standard values corresponding to the N measurements, a calculation to be employed.

### BRIEF DESCRIPTION OF THE DRAWINGS

FIG. 1 is a block diagram illustrating a configuration of main portions of a measurement system according to a first embodiment.
FIG. 2 is a diagram for describing a relationship between a flow rate equivalent value and a flow rate.
FIG. 3 is a diagram for describing an example of calibration processing.

### DESCRIPTION OF EMBODIMENTS

### First Embodiment

A measurement system 1 according to a first embodiment will be described below. The measurement system 1 is an example of a measurement system (laser Doppler flow rate measurement system) that uses laser Doppler flowmetry (LDF). For convenience of description, a member having the same function as that of a member described in the first embodiment will be denoted by the same reference sign in each of subsequent embodiments, and a description thereof will not be repeated. Descriptions of matters the same as or similar to those in the related art will also be omitted as appropriate. Note that each numerical value to be described below in this specification is merely an example. In the present specification, a description of "from A to B" with respect to two numbers A and B means "A or more and B or less" unless expressly stated otherwise.

### Principles and Problems of LDF

When a fluid is irradiated by a laser beam, the laser beam is scattered by (i) a scatterer contained in the fluid and moving with the fluid and (ii) a stationary object, such as a tube, through which the fluid flows, and scattered light is generated. Generally, the scatterer causes non-uniformity of the complex index of refraction in the fluid.

Due to the Doppler effect corresponding to a flow rate of the scatterer, the scattered light generated by the scatterer moving with the fluid is subject to a wavelength shift. On the other hand, the scattered light generated by the stationary object is not subject to a wavelength shift. Since the scattered light causes light interference, an optical beat (buzz) is observed.

In the LDF, a flow rate equivalent value is calculated by analyzing a frequency intensity distribution (frequency power spectrum) of a light reception signal including the optical beat described above.

In order to obtain an actual flow rate value from the flow rate equivalent value described above, the following calibration processing of (1) to (3) is required.
(1) The flow rate of the fluid is changed in various ways, and, for each flow rate, a plurality of pairs of the flow rate equivalent value calculated in the above-described manner and the separately measured actual flow rate value (flow rate equivalent values and measured flow rate values) are obtained.
(2) A plurality of regression equations are set by applying a plurality of types of regression equation, such as a linear function, a quadratic function, a power math function, and an exponential function, to the plurality of pairs described above (flow rate equivalent values and measured flow rate values) and determining each coefficient.
(3) Among the set regression equations, a regression equation is identified that most closely approximates the plurality of pairs (flow rate equivalent values and measured flow rate values), and the identified regression equation is employed as a conversion equation for converting the flow rate equivalent value into the measured flow rate value.

The degree of wavelength shift caused by the Doppler effect significantly changes, for example, due to the following variation factors relating to a measurement system.
- Properties of fluid: Viscosity, transmittance of laser beam, size, shape, and concentration of scatterer, and relative ratio of complex index of refraction between solvent and scatterer.
- Measurement environment: Thickness and material (optical characteristics) of tube through which fluid flows, the diameter of tube, and distance between tube and light receiving surface.

As a result, even when a suitable regression equation can be set for a certain measurement system, in another measurement system, even when the type or coefficient of the regression equation is changed, a suitable regression equation, which can keep errors within an allowable range, may not be obtainable. Thus, generally, LDF is recognized as a method that has low versatility for the measurement system.

In contrast, the laser Doppler flow rate measurement system of the first embodiment (the measurement system 1, for example) can (i) perform a plurality of types of calculation in a process of obtaining the flow rate equivalent value from the light reception signal generated as a result of receiving the scattered light, and can (ii) select the type of calculation depending on the measurement system. Thus, according to the measurement system 1, versatility can be improved.

### Overview of Measurement System 1

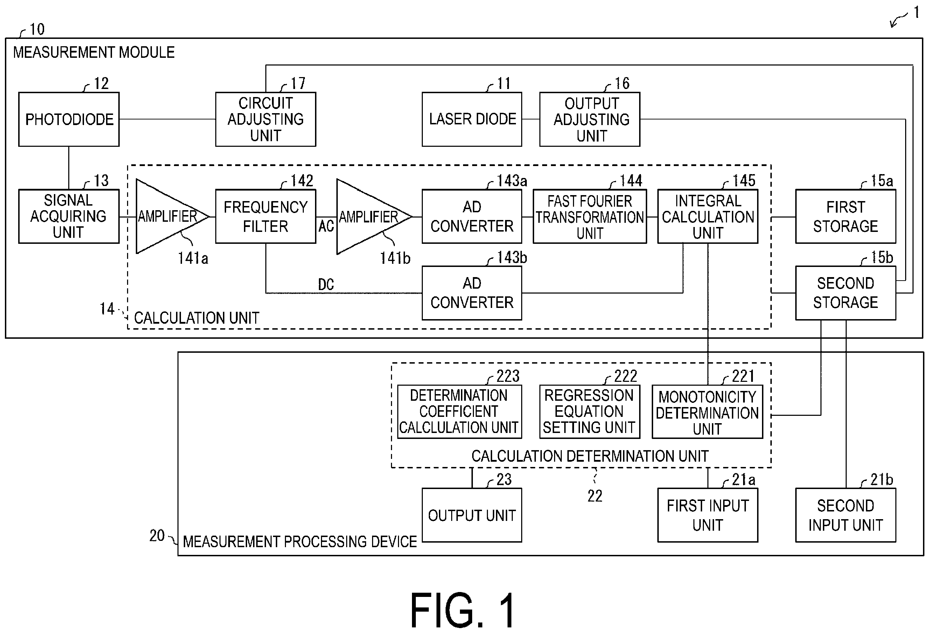

FIG. 1 is a block diagram illustrating a configuration of main portions of the measurement system 1. The measurement system 1 includes a measurement module 10 and a measurement processing device 20. The measurement system 1 measures a flow rate (hereinafter referred to as Q) of a fluid (not illustrated in FIG. 1). The fluid is an example of a moving measurement target. Q is an example of a degree of motion of the measurement target. However, the degree of motion of the measurement target is not limited to Q. The measurement system 1 may measure a flow velocity of the fluid as the degree of motion of the measurement target.

The measurement module 10 is an example of a slave device in the measurement system 1. In contrast, the measurement processing device 20 is an example of a master device in the measurement system 1. The measurement processing device 20 may be, for example, a personal computer (PC). The measurement module 10 measures the fluid (not illustrated) in response to a command from the measurement processing device 20 (more specifically, calculates x to be described later). The measurement processing device 20 converts (changes) x into Q using a regression equation (approximation equation). The measurement processing device 20 also calibrates the measurement module 10 by comparing the calculated Q with the measured flow rate value to be described later.

### Measurement Module 10

The measurement module 10 includes a laser diode 11, a photodiode 12, a signal acquiring unit 13, a calculation unit 14, a first storage 15a, a second storage 15b, an output adjusting unit 16, and a circuit adjusting unit 17.

The laser diode 11 emits a laser beam L1 toward the fluid. In the following description, for simplicity, the "laser beam L1" will also be referred to simply as "L1". Note that the same also applies to other reference signs. As a result of the scatterer contained in the fluid scattering L1, scattered light L2 is generated. The laser diode 11 is an example of a light source for generating L2. The output adjusting unit 16 adjusts an output of the laser diode 11 (in other words, the intensity of L1).

By receiving L2 from the scatterer, the photodiode 12 generates an electrical signal (a voltage signal, for example) corresponding to L2. The electrical signal is an example of the light reception signal. The photodiode 12 is an example of a light receiving element (more specifically, a photoelectric conversion element). The photodiode 12 includes a light receiving circuit (not illustrated) for generating the light reception signal. The circuit adjusting unit 17 may adjust characteristics (gain resistance and frequency characteristics, for example) of the light receiving circuit. The signal acquiring unit 13 acquires the light reception signal from the photodiode 12, and supplies the light reception signal to the calculation unit 14.

The calculation unit 14 calculates a calculation value (derives a calculation result) by performing a calculation with respect to the light reception signal. The calculation unit 14 performs M (M is an integer of 2 or more) types of calculation with respect to the light reception signal, and can calculate M calculation values. In addition, based on an input from the outside (an input from the measurement processing device 20, for example), the calculation unit 14 can switch calculations to be performed among the M types of calculation, and perform a chosen calculation.

The calculation unit 14 includes amplifiers 141a and 141b (amplification equipment), a frequency filter 142, analog-digital (AD) converters 143a and 143b, a fast Fourier transformation unit 144, and an integral calculation unit 145. As an example, the calculation unit 14 derives a frequency power spectrum (hereinafter also referred to simply as a "spectrum") of the light reception signal. By analyzing the spectrum, the calculation unit 14 calculates the flow rate equivalent value (hereinafter referred to as x) as the calculation value.

The amplifier 141a amplifies the light reception signal acquired from the signal acquiring unit 13, and supplies the amplified light reception signal to the frequency filter 142. The frequency filter 142 performs frequency filtering on the light reception signal acquired from the amplifier 141a. In the first embodiment, the frequency filter 142 may include a low-pass filter and a high-pass filter (not illustrated). According to this configuration, the frequency filter 142 can separate the light reception signal into an alternating current (AC) component and a direct current (DC) component.

In the example of the first embodiment, the frequency filter 142 (i) supplies the AC component separated by the high-pass filter to the amplifier 141b, and (ii) supplies the DC component separated by the low-pass filter to the AD converter 143b. As the amount of light incident on the photodiode 12 increases, the signal level of the DC component increases.

The amplifier 141b amplifies the AC component acquired from the frequency filter 142, and supplies the amplified AC component to the AD converter 143a. The AD converter 143a converts the AC component (analog signal) acquired from the amplifier 141b into a digital signal at a predetermined sampling rate (also referred to as a sampling frequency). The AD converter 143a supplies the digital signal after the conversion (digitized AC component) to the fast Fourier transformation unit 144.

The fast Fourier transformation unit 144 derives the spectrum by performing fast Fourier transformation (FFT) on the digitized AC component. In other words, by performing the FFT, the fast Fourier transformation unit 144 converts time domain data of the light reception signal into frequency domain data of the light reception signal. The fast Fourier transformation unit 144 supplies the spectrum to the integral calculation unit 145. In the following description, the frequency of the spectrum will be denoted by f, and power will be denoted by P.

The AD converter 143b converts the DC component (analog signal) acquired from the frequency filter 142 into a digital signal using the same sampling rate as the AD converter 143a. The AD converter 143b supplies the digital signal after the conversion (digitized DC component) to the integral calculation unit 145.

In the example of the first embodiment, in calibration processing to be described later, the integral calculation unit 145 performs sampling using three types of sampling rate. Each sampling described above is an example of an M type of calculation. In this manner, the M types of calculation may include sampling using p (p is an integer of from 2 to M) types of sampling rate. The example of the first embodiment corresponds to a case in which p = 3.

The integral calculation unit 145 calculates x as the calculation result by performing a known integral calculation on the spectrum. As will be described later, the frequency band applied in the integral calculation may be set as desired. Note that, in the integral calculation unit 145, the digitized DC component is used for a normalization calculation that is performed when calculating x. Using the normalization calculation, the dependency of x on the intensity of received light can be reduced.

In the example of the first embodiment, in the calibration processing, the integral calculation unit 145 performs two types of integral calculation. Each of the two types of integral calculation is an example of the M types of calculation. As will be described later, in each of modes 0 to 1 (described later) of the calibration processing, x is calculated by a mutually different integral calculation equation. In this manner, the M types of calculation may include q (q is an integer of from 2 to M) types of integral calculation. The example of the first embodiment corresponds to a case in which q = 2.

For example, in the mode 0, the integral calculation unit 145 calculates a primary moment "JfP" of the spectrum as x. More precisely, the integral calculation unit 145 may calculate ΣfP as an approximation of JfP. In this case, the integral calculation unit 145 calculates ΣfP as x.

In the mode 1, the integral calculation unit 145 calculates an integral value of the spectrum, that is, "JP", as x. More precisely, the integral calculation unit 145 may calculate ΣP as an approximation of fP. In this case, the integral calculation unit 145 calculates ΣP as x.

The first storage 15a stores information for identifying the content of each of the M types of calculation. For example, the first storage 15a may store, in advance, the integral calculation equation to be applied by the integral calculation unit 145 in each of the modes 0 to 1. The first storage 15a may also store, in advance, the three types of sampling rate to be applied by the AD converters 143a and 143b. In this manner, the first storage 15a may store various parameters (parameter sets) of the measurement module 10 and various integral calculation equations used for calculating x.

The second storage 15b stores a plurality of the calculations determined by the measurement processing device 20 (more specifically, a calculation determination unit 22 to be described later) for each of measurement conditions. Examples of the measurement condition include the type of fluid. For example, as will be described later, as a result of the calibration processing, a table may be created that indicates a correspondence relationship between the type of fluid and the calculation to be employed. In this case, the second storage 15b may store the table. Note that a second input unit 21b to be described below may supply information for specifying the measurement condition, to the second storage 15b.

### Measurement Processing Device 20

The measurement processing device 20 includes a first input unit 21a, the second input unit 21b, a calculation determination unit 22, and an output unit 23. The first input unit 21a and the second input unit 21b are input interfaces for receiving various inputs by a user. Q (measured flow rate value) separately measured by a measurement device separate from the measurement system 1 may be input to the first input unit 21a. The information for specifying the measurement condition (type of fluid, for example) may be input to the second input unit 21b. Accordingly, in measurement processing to be described later, the calculation unit 14 can select and perform the calculation stored in the second storage 15b in accordance with the information input to the second input unit 21b.

The measured flow rate value of the first embodiment is an example of a "standard value corresponding to a measurement" in the present specification. The "standard value corresponding to the measurement" refers to a value indicating a degree of actual motion of the measurement target measured by the measurement system 1, and refers to (i) a value measured separately from the measurement system 1, and/or (ii) a value calculated by a simulation. The standard value is typically a physical quantity indicating the degree of actual motion of the measurement target.

The calculation determination unit 22 includes a monotonicity determination unit 221, a regression equation setting unit 222, and a determination coefficient calculation unit 223. The calculation determination unit 22 determines (i) M x N calculation values that are obtained by performing measurements N (N is an integer of 2 or more) times in the measurement system 1, and (ii) the calculation to be employed by the measurement module 10, based on N standard values corresponding to the N measurements (N measured flow rate values, for example).

The monotonicity determination unit 221 determines whether or not (i) N values of x calculated by the same type of calculation (the integral calculation "JfP", for example) and (ii) the N standard values corresponding to the N values of x (N measured values of Q) have a relationship of a monotonic increase or a monotonic decrease. In the present specification, when the values of x and the standard values have the relationship of a monotonic increase or a monotonic decrease, this is also described as "the values of x and the standard values have monotonicity".

Generally, the values of x and the standard values are considered to have a significant correlation. Therefore, when the values of x and the standard values do not have monotonicity (in the case of no monotonicity), even if the regression equation is set based on the values of x and the standard values, Q calculated from x using the regression equation may not be highly accurate with respect to the standard values. Thus, in the case of no monotonicity, the monotonicity determination unit 221 can exclude the same type of calculation described above from candidates for the calculation to be employed by the measurement module 10.

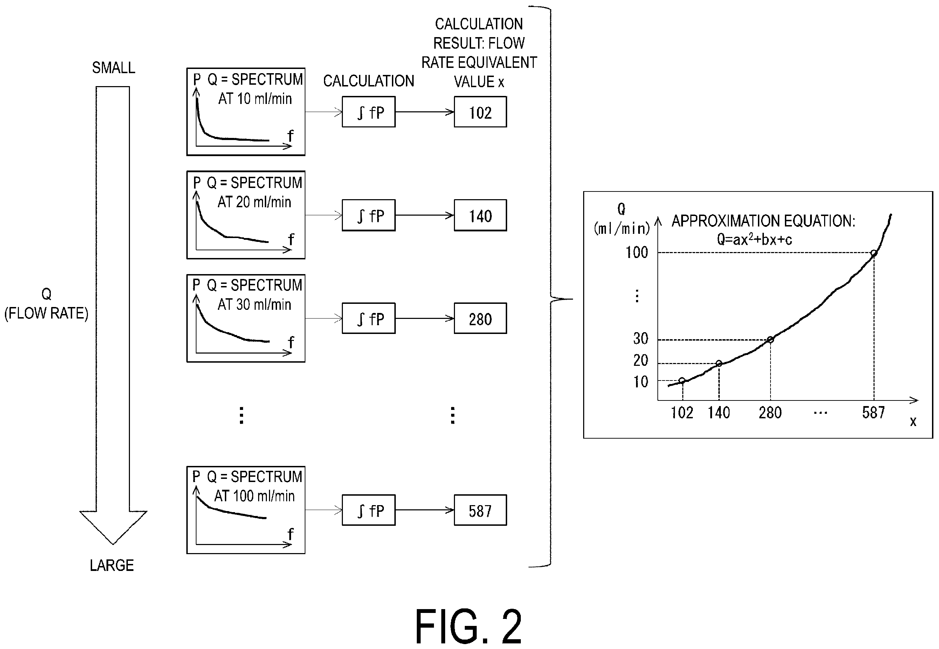

The regression equation setting unit 222 sets the regression equation (approximation equation) for converting x into Q, by performing a regression analysis on the N standard values. FIG. 2 is a diagram for describing a relationship between the calculation values (flow rate equivalent values: x) and the standard values (flow rates: Q). In an example illustrated in FIG. 2, a case is considered in which N = 10. However, in FIG. 2, for simplicity, only four of the standard values are illustrated. As described above, the integral calculation "JfP" illustrated in FIG. 2 is an example of the M types of calculation.

In the example illustrated in FIG. 2, the standard values are input to the first input unit 21a at 10 ml/min increments over a range of Q = 10 to 100 ml/min. The measurement module 10 calculates x corresponding to each of the standard values. For example, the measurement module 10 derives the spectrum at Q = 10 ml/min, and calculates x by performing an integral calculation on the spectrum. In the example illustrated in FIG. 2, when Q = 10 ml/min, x = 102 was calculated. Similarly to the example described above, the measurement module 10 calculates x corresponding to Q for all of the other values of Q. In this manner, the measurement module 10 calculates the N values of x corresponding to the N standard values, respectively.

In FIG. 2, a case is illustrated as an example in which the regression equation setting unit 222 sets a regression equation as a quadratic function of x. Using a known regression analysis technique, the regression equation setting unit 222 sets three parameters (coefficients a, b, and c of quadratic function) in the regression equation "Q = ax² + bx + c" based on 10 standard values and 10 values of x. Note that the regression equation is not limited to the example illustrated in FIG. 2. For example, a known polynomial function or exponential function may be used as the regression equation.

The determination coefficient calculation unit 223 calculates a determination coefficient (R²) for the regression equation set by the regression equation setting unit 222, using the N standard values. The determination coefficient takes a value from 0 to 1. The higher the determination coefficient, the higher the accuracy of the regression equation. Therefore, the higher the determination coefficient, the more likely the regression equation is able to calculate Q close to the standard value. Ideally, when the determination coefficient is 1, Q calculated by the regression equation matches the standard value. In this manner, the determination coefficient is an example of an index for evaluating the accuracy of the regression equation. In other words, the determination coefficient can be understood to be an example of an index for evaluating the calculation value of the measurement module 10.

### Calibration Processing

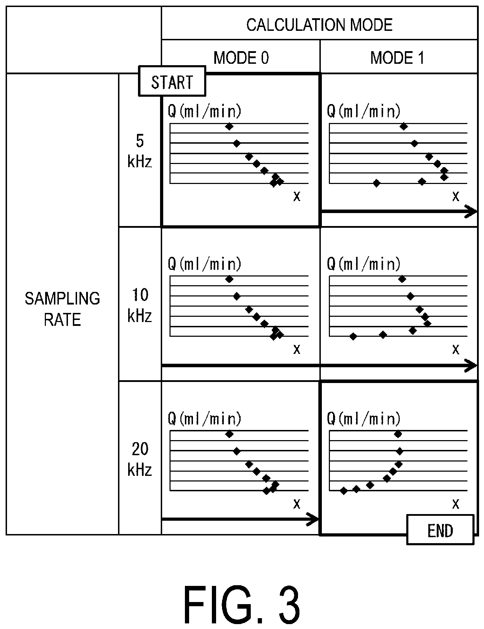

FIG. 3 is a diagram for describing an example of the calibration processing in the measurement system 1. In an example illustrated in FIG. 3, a calculation is performed in the measurement module 10 using three different types of sampling rate. In the example illustrated in FIG. 3, the measurement module 10 (more specifically, the integral calculation unit 145) has two types of calculation mode (more specifically, integral calculation modes), namely, the modes 0 to 1. In other words, the example illustrated in FIG. 3 corresponds to a case in which p = 3 and q = 2. That is, the example in FIG. 3 corresponds to a case in which M = 6. Note that in the example illustrated in FIG. 3, it is assumed that N = 8. Each of graphs shown in FIG. 3 indicates a correspondence relationship between the calculation values (x) and the standard values (Q) obtained in each of the modes. In the following example, for convenience of description, it is assumed that the determination by the monotonicity determination unit 221 is not performed.

### Data Acquisition at First Sampling Rate

The calibration processing is started by the user depressing a button (a calibration processing start button, for example) of the measurement system 1 (note that the button is not illustrated). Specifically, the measurement processing device 20 is triggered by the depression of the button described above, and gives a command to the measurement module 10 for starting the calibration processing.

In response to the command described above, the measurement module 10 reads out information from the first storage 15a, sets the sampling rate to a first sampling rate (5 kHz in the example illustrated in FIG. 3), and selects the mode 0.

As described above, in the mode 0, "JfP" is performed as the integral calculation. In the mode 0, the measurement module 10 sequentially calculates one of the calculation values (x) corresponding to one of the standard values (Q) by performing the integral calculation "JfP" on the spectrum obtained by the first sampling rate. In this manner, the regression equation setting unit 222 calculates the N values of x in the mode 0.

After the completion of the calculation in the mode 0, the measurement module 10 reads out information from the first storage 15a, and transitions to the mode 1. As described above, in the mode 1, "JP" is performed as an integral calculation. In the mode 1, the measurement module 10 calculates the N values of x by performing the integral calculation "JP" on the spectrum obtained by the first sampling rate.

### Data Acquisition at Second Sampling Rate

After the completion of the calculation in the mode 1 at the first sampling rate, the measurement module 10 reads out information from the first storage 15a, changes the sampling rate to a second sampling rate (10 kHz in the example illustrated in FIG. 3), and transitions to the mode 0. Similarly to the example described above, in the order from the mode 0 to the mode 1, the measurement module 10 calculates the N values of x in each of the modes using the second sampling rate.

### Data Acquisition at Third Sampling Rate

After the completion of the calculation in the mode 1 at the second sampling rate, the measurement module 10 reads out information from the first storage 15a, changes the sampling rate to a third sampling rate (20 kHz in the example illustrated in FIG. 3), and transitions to the mode 0. Similarly to the example described above, in the order from the mode 0 to the mode 1, the measurement module 10 calculates the N values of x in each of the modes using the third sampling rate.

### Determination of Regression Equation and Calculation

As described above, in the example illustrated in FIG. 3, a total of six data sets were calculated. The calculation determination unit 22 sets a predetermined type of the regression equation for each of the data sets, and calculates the determination coefficient for each of the regression equations.

As an example, first, the calculation determination unit 22 sets the regression equation, as a linear function, for each of the six data sets, and calculates the determination coefficient for each of the set six regression equations (linear functions). Subsequently, the calculation determination unit 22 sets the regression equation, as a quadratic function, for each of the six data sets, and calculates the determination coefficient for each of the set six regression equations (quadratic functions). Subsequently, the calculation determination unit 22 sets the regression equation, as an exponential function, for each of the six data sets, and calculates the determination coefficient for each of the set six regression equations (exponential functions).

As described above, in the example shown in FIG. 3, a total of 18 regression equations are set, and the determination coefficients are calculated for the set 18 regression equations, respectively. The calculation determination unit 22 selects a maximum determination coefficient from among the 18 determination coefficients described above. The calculation determination unit 22 determines the regression equation having the maximum determination coefficient (hereinafter also referred to as a "best regression equation) among the 18 regression equations described above, as the regression equation to be employed by the calculation determination unit 22 for the measurement condition under which the six data sets described above are obtained.

Subsequently, in the determined regression equation (best regression equation), the calculation determination unit 22 determines a parameter set that has been applied to the measurement module 10, as a parameter set to be employed under the measurement condition described above. In this manner, the calculation determination unit 22 may determine the calculation to be employed by the measurement module 10, by evaluating the calculation using the regression analysis (more specifically, the determination coefficient). Hereinafter, the calculation determined at the measurement module 10 will also be referred to as a "best calculation".

The calculation determination unit 22 may store, in the table of the second storage 15b, (i) the type of best calculation, (ii) the type of best regression equation (the quadratic function, for example), and (iii) the coefficients of the best regression equation (coefficients a, b, and c of quadratic function, for example), in association with the measurement condition described above. In the example of the first embodiment, the type of best calculation includes "optimal sampling rate" and "type of optimal integral calculation equation" (optimal mode).

In the calibration processing, the output unit 23 may present, to the user, the regression equation and the calculation (the best regression equation and the best calculation) determined by the calculation determination unit 22. The output unit 23 may be, for example, a display.

### Measurement Processing

After the calibration processing, the measurement system 1 performs measurement. After the user inputs the information for specifying the measurement condition in the second input unit 21b, when the user depresses a button that is not illustrated in the drawings (a measurement start button, for example) of the measurement system 1, measurement processing is started. Specifically, each of the calculation unit 14 and the calculation determination unit 22 is triggered by the depression of the button described above, and reads out the table in the second storage 15b. In this manner, in the measurement system 1, preparations are made for measurement corresponding to the measurement condition described above. After the reading-out of the table is completed, the measurement system 1 starts the measurement processing.

According to the measurement system 1, x can be calculated in the measurement module 10 using the calculation (best calculation ) determined by the calculation determination unit 22. For example, the measurement module 10 can calculate x using the optimal sampling rate and integral calculation equation corresponding to the measurement condition. The measurement processing device 20 can convert x obtained by the best calculation into Q using the best regression equation. Thus, according to the measurement system 1, Q can be measured with a high accuracy. In the measurement processing, the output unit 23 may present, to the user, Q calculated using the best regression equation.

### Effects

As described above, in the measurement system 1, the calculation determination unit 22 determines the calculation to be employed by the measurement module 10, based on (i) the M x N calculation values obtained by the measurement module 10 performing the measurements N times, and (ii) the N standard values respectively corresponding to the N measurements. For example, as described above, the calculation determination unit 22 may determine the calculation to be employed by the measurement module 10 by evaluating the calculation by regression analysis based on the N calculation values calculated by the same type of calculation in the measurement module 10 and the N standard values respectively corresponding to those calculation values.

According to the measurement system 1, unlike a configuration (known configuration) in which a suitable regression equation is determined simply based on a relationship between the N calculation values and the N standard values, the calculation to be employed by the measurement module 10 can be determined after performing a plurality of types of calculation on the light reception signal. Thus, a measurement system can be constructed that can handle a greater variety of measurement targets. In particular, according to the measurement system 1, unlike known technologies, a laser Doppler flow rate measurement system can be realized that has excellent versatility with respect to the measurement system.

### Second Embodiment

In the first embodiment, a configuration is illustrated in which the integral calculation unit 145 is provided in the measurement module 10. However, in the measurement system 1, the integral calculation unit 145 may be provided in the measurement processing device 20. Similarly, the fast Fourier transformation unit 144 may be provided in the measurement processing device 20. In other words, x may be calculated by the measurement processing device 20.

However, from the perspective of improving the convenience of the measurement system 1, the fast Fourier transformation unit 144 and the integral calculation unit 145 are preferably provided in the measurement module 10. This is because, in this case, the calculations can be updated by updating firmware of the measurement module 10. On the other hand, when the fast Fourier transformation unit 144 and the integral calculation unit 145 are provided in the measurement processing device 20, for updating the calculations, settings of the measurement processing device 20 and peripheral devices thereof may need to be changed. In this manner, when the fast Fourier transformation unit 144 and the integral calculation unit 145 are provided in the measurement module 10, the calculations can be easily updated.

### Variations

Each of the embodiments according to the present disclosure has been described above based on the drawings and examples. However, an aspect of the present disclosure is not limited to each of the embodiments described above. In other words, various changes can be made to the aspect of the present disclosure within the scope indicated by the present disclosure. Embodiments that are obtained by appropriately combining technical means disclosed in different embodiments are also included in the technical scope of the aspect of the present disclosure. In other words, note that a person skilled in the art can easily make various variations or modifications based on the present disclosure. Note that these variations or modifications are included within the scope of the present disclosure.

In the first embodiment, an example of the "calculation" determined by the calculation determination unit 22 is the integral calculation (calculation performed on the spectrum that is the conversion result by the fast Fourier transformation unit 144) at the integral calculation unit 145. In the first embodiment, as another example of the "calculation" determined by the calculation determination unit 22, the AD conversion (AD conversion at the predetermined sampling rate) at the AD converters 143b and 143b is illustrated. However, the calculation is not limited to these examples. In addition to the examples described above, the "calculation" determined by the calculation determination unit 22 also includes (i) the FFT by the fast Fourier transformation unit 144, and (ii) amplification of the light reception signal by the amplifiers 141a and 141b. The calculation may be a digital calculation or an analog calculation.

Accordingly, the M types of calculation may include r (r is an integer from 2 to M) types of amplification of the light reception signal.

The calculation performed on the spectrum is not limited to the integral calculation. Unlike the example illustrated in the first embodiment, in addition to the modes 0 and 1, the measurement module 10 may have an additional calculation mode called a mode 2. As an example, in the mode 2, a calculation "Σlog(P)" may be performed on the spectrum. In this manner, unlike the example illustrated in the first embodiment, q may be set such that q = 3.

Note that, in the first embodiment, a case is illustrated as an example in which p > 2. However, in an aspect of the present disclosure, p may be set such that p = 1. In other words, the sampling rate for the calculation may be fixed to one type.

However, the frequency band of the light reception signal may change depending on the degree of motion of the measurement target. For example, when Q is large, more of a high frequency component may be included in the light reception signal than in a case in which Q is small. Thus, in order to cover a wider frequency band, sampling is preferably performed on the light reception signal using a relatively large sampling rate. From this, in order to further improve the versatility of the measurement system 1, p is preferably set such that p > 2.

Similarly to the above description for p, in an aspect of the present disclosure, q may be set such that q = 1. However, in order to further improve the versatility of the measurement system 1, q is preferably set such that q > 2. With respect to this point, the same also applies to r.

In the first embodiment, the determination coefficient is illustrated as an example of the index for evaluating the accuracy of the regression equation (in other words, index for evaluating the calculation value of the measurement module 10). However, in an aspect of the present disclosure, the index is not limited to the determination coefficient.

Unlike the first embodiment, the monotonicity determination unit 221, when (i) the N values of x calculated by the same type of calculation equation and (ii) Q corresponding to the N values of x do not have monotonicity (that is, when there is no monotonicity), may leave the above-described same type of calculation as the candidate for the calculation to be employed for just a region in which monotonicity can be secured.

Note that the parameter set may include a parameter indicating an output of the laser diode 11 (hereinafter referred to as an output parameter). Accordingly, the calculation determination unit 22 may determine the output parameter based on a set of the M x N calculation values and the N standard values, both of which are obtained respectively corresponding to a plurality of different outputs of the laser diode 11. The output adjusting unit 16 may set the output of the laser diode 11 as per the output parameter determined by the calculation determination unit 22.

The parameter set may include a parameter indicating characteristics of the light receiving circuit of the photodiode 12 (hereinafter referred to as a characteristics parameter). Accordingly, the calculation determination unit 22 may determine the characteristics parameter based on a set of the M x N calculation values and the N standard values, both of which are obtained respectively corresponding to a plurality of different characteristics of the light receiving circuit. The circuit adjusting unit 17 may set the characteristics of the light receiving circuit as per the characteristics parameter determined by the calculation determination unit 22.

The parameter set may include a parameter indicating a frequency band applied to an integral calculation. The frequency band may be, for example, a frequency band of 100 kHz or more (hereinafter referred to as a first frequency band), or may be a frequency band in a range from 0 to 50 kHz (hereinafter referred to as a second frequency band). Note that the frequency band applied to the integral calculation need not necessarily be continuous. For example, the frequency band may be a combination of the first frequency band and the second frequency band described above.

Alternatively, the parameter set may include a parameter indicating a number of samples (FFT samples) used when FFT is performed on the sampled data. As described above, the calculation determination unit 22 may determine a predetermined parameter based on the set of the M x N calculation values and the N standard values.

Unlike the first embodiment, the first input unit 21a can be removed from the measurement system 1. In this case, the N measured flow rate values may be preset in the measurement system 1. In this case, for example, before starting the calibration processing, the user monitors each of the individual measured flow rate values using another measurement device. Then, at a timing when the flow rate of the fluid reaches a certain measured flow rate value, the user depresses the button (not illustrated) of the measurement system 1. The measurement system 1 starts the calibration processing as a result of being triggered by the depression of the button. Specifically, the measurement system 1 calculates the flow rate equivalent value corresponding to the certain measured flow rate value described above. After that, also at a timing when the flow rate of the fluid reaches another measured flow rate value, the measurement system 1 performs the same or similar processing again, as a result of being triggered by the user depressing the button.

Note that, unlike the first embodiment, a functional unit that performs processing of converting x into Q using the best regression equation (for convenience, the unit will be referred to as a "conversion unit") may be provided in the measurement module 10. In this case, the measurement processing device 20 may acquire Q calculated by the conversion unit, from the measurement module 10.

### Example of Implementation by Software

A control block of the measurement system 1 (particularly the calculation unit 14 and the calculation determination unit 22) may be implemented by a logic circuit (hardware) formed in an integrated circuit (IC chip) or the like, or may be implemented by software.

In the latter case, the measurement system 1 includes a computer that executes instructions of a program that is software to implement each function. The computer includes, for example, one or more processors and a computer-readable recording medium that stores the above program. In the above-described computer, the above-described processor reads the above-described program from the above-described recording medium, and executes the read program to achieve the object of the invention according to the present disclosure. As the processor, a central processing unit (CPU) can be used, for example. As the recording medium, a "non-transitory tangible medium" such as, for example, a read only memory (ROM), a tape, a disk, a card, a semiconductor memory, a programmable logic circuit, and the like can be used. Additionally, a random access memory (RAM) for loading the above program may be further provided. The above-described program may be supplied to the computer via any transmission medium (communication network, broadcast wave, and the like) capable of transmitting the program. Note that the invention according to the present disclosure may be implemented in the form of data signals embedded in a carrier wave in which the above-described program is embodied by electronic transmission.

### REFERENCE SIGNS

1 Measurement system
10 Measurement module
11 Laser diode (light source)
12 Photodiode (light receiving circuit)
13 Signal acquiring unit
14 Calculation unit
15a First storage
15b Second storage
16 Output adjusting unit
17 Circuit adjusting unit
20 Measurement processing device
21a First input unit
21b Second input unit (input unit)
22 Calculation determination unit
141a, 141b Amplifier
142 Frequency filter
143a, 143b AD Converter
144 Fast Fourier transformation unit
145 Integral calculation unit
221 Monotonicity determination unit
222 Regression equation setting unit
223 Determination coefficient calculation unit

## Claims

1. A measurement system for measuring a degree of motion of a moving measurement target, the measurement system comprising:
a signal acquiring unit configured to acquire a light reception signal generated by receiving scattered light from the measurement target;
a calculation unit configured to perform M (M is an integer of 2 or more) types of calculation with respect to the light reception signal, to calculate M calculation values; and
a calculation determination unit configured to determine, based on M x N of the calculation values obtained by performing N (N is an integer of 2 or more) measurements and based on N standard values corresponding to the N measurements, a calculation to be employed.

2. The measurement system according to claim 1, wherein
the M types of calculation comprise sampling at p (p is an integer of 2 or more and M or less) types of sampling rate.

3. The measurement system according to claim 1 or 2, wherein
the M types of calculation comprise q (q is an integer of 2 or more and M or less) types of integral calculation.

4. The measurement system according to any one of claims 1 to 3, wherein
the M types of calculation comprise r (r is an integer of 2 or more and M or less types of amplification with respect to a light reception signal).

5. The measurement system according to any one of claims 1 to 4, wherein
the calculation determination unit makes the determination by evaluating the calculation using regression analysis based on the N calculation values calculated by the same type of calculation and the N standard values corresponding to the N calculation values.

6. The measurement system according to any one of claims 1 to 5, wherein
when N calculation values calculated by the same type of calculation and the N standard values corresponding to the N calculation values do not have a relationship of a monotonic increase or a monotonic decrease, the calculation determination unit excludes the calculation from among candidates for the calculation to be employed.

7. The measurement system according to any one of claims 1 to 5, wherein
when N calculation values calculated by the same type of calculation and the N standard values corresponding to the N calculation values do not have a relationship of a monotonic increase or a monotonic decrease, the calculation determination unit leaves the calculation as a candidate for the calculation to be employed, for just a region in which the relationship of the monotonic increase or the monotonic decrease is secured.

8. The measurement system according to any one of claims 1 to 7, further comprising:
an output adjusting unit configured to adjust an output of a light source for generating the scattered light, wherein
the calculation determination unit determines the output to be employed based on sets of the M x N calculation values and the N standard values, the sets being respectively obtained in correspondence to a plurality of the outputs.

9. The measurement system according to any one of claims 1 to 8, further comprising:
a circuit adjusting unit configured to adjust a characteristic of a light receiving circuit for generating the light reception signal, wherein
the calculation determination unit determines the characteristic to be employed based on the sets of the M x N calculation values and the N standard values, the sets being respectively obtained in correspondence with a plurality of the characteristics.

10. The measurement system according to any one of claims 1 to 9, further comprising:
a measurement module comprising the signal acquiring unit and the calculation unit;
a measurement processing device comprising the calculation determination unit; and
a first storage provided in the measurement module and configured to store information for identifying a content of each of the M types of calculation.

11. The measurement system according to any one of claims 1 to 10, further comprising:
an input unit configured to receive, as an input, information for specifying measurement conditions; and
a second storage configured to store, for each of the measurement conditions, a plurality of the calculations determined by the calculation determination unit, wherein
the calculation unit selects and performs the calculation stored in the second storage, in accordance with the information input to the input unit.

12. A measurement module for measuring a degree of motion of a moving measurement target, the measurement module comprising:
a signal acquiring unit configured to acquire a light reception signal generated by receiving scattered light from the measurement target; and
a calculation unit configured
to perform M (M is an integer of 2 or more) types of calculation with respect to the light reception signal,
to calculate M calculation values, and,
based on an input from outside, to switch a calculation operation to be performed among the M types of calculation, and perform the calculation.

13. A measurement processing device for determining the calculation to be performed with respect to the measurement module according to claim 12, the measurement processing device comprising:
a calculation determination unit configured to determine, based on M x N of the calculation values obtained by performing N (N is an integer of 2 or more) measurements and based on N standard values corresponding to the N measurements, the calculation to be performed.

14. A measurement method for measuring a degree of motion of a moving measurement target, the measurement method comprising:
signal acquiring processing of acquiring a light reception signal generated by receiving scattered light from the measurement target;
calculation processing of performing M (M is an integer of 2 or more) types of calculation with respect to the light reception signal, to calculate M calculation values; and
calculation determination processing of determining, based on M x N of the calculation values obtained by performing N (N is an integer of 2 or more) measurements and based on N standard values corresponding to the N measurements, a calculation to be employed.
